# EUROPEAN PATENT APPLICATION

(11) **EP 2 592 438 A2**
(43) Date of publication of application: **15.05.2013**
(21) Application number: 12191525.0
(22) Date of filing: 07.11.2012
(51) Int. Cl.: G01T 3/00

(54) **Neutron Detector and Method for Detecting Neutrons**

(30) Priority: 10.11.2011 US 201113293320
(71) Applicant: General Electric Company, Schenectady, New York 12345 (US)
(72) Inventor: Mckinny, Kevin Scott, Hudson, OH Ohio 44236 (US); Johnson, Nathan Herbert, Garfield Heights, OH Ohio 44125 (US); Anderson, Thomas Robert, Perry, OH Ohio 44081 (US)
(74) Representative: Szary, Anne Catherine

(57) **Abstract**

A ¹⁰B neutron detector (10) and an associated method of detecting neutrons are disclosed. The detector (10) includes an exterior shell (20) bounding and sealing an interior volume (30), a neutron-sensitive boron coating (50) located on at least part of the exterior shell (20) at the interior volume (30). One of the boron coating (50) and the exterior shell (20) serves as a cathode, and a central structure (38) located within the interior volume (30) and serves as an anode. The detector (10) includes gas within the interior volume (30) that conducts an electrical energy pulse between the cathode and the anode in response to a neutron impinging upon the neutron-sensitive boron coating (50). The gas includes a quantity of ³He gas sensitive to neutron impingement and generating an electrical energy pulse for reception by the anode in response to a neutron impinging upon the ³He gas. The method includes detecting at least one neutron via impingement of the neutron upon the ³He gas.

## Description

### BACKGROUND OF THE INVENTION

### FIELD OF THE INVENTION

The invention relates to neutron detection using a Boron-10 (¹⁰B) lined neutron detector, and specifically relates to the addition of a second neutron sensitive substance to the ¹⁰B neutron detectors.

### DISCUSSION OF PRIOR ART

Helium-3 (³He) neutron detectors have been used to detect free neutrons. After September 11, 2001, the global demand for ³He has increased significantly. Nearly half of the ³He demand was driven by the deployment of large radiation portal monitors. In 2008, the global supply of ³He was very low and many programs requiring ³He for neutron detection were postponed or canceled. Unfortunately, the supply of ³He is limited to production as a byproduct from the decay of tritium (which has a 12.3 year half-life); tritium is produced as part of weapons programs as a booster for nuclear weapons or as a byproduct of reactor operation. The main supplier of ³He in America is the U.S. Department of Energy. As the remaining supply of ³He is allocated among the higher priority programs, the supply of ³He is being used more judiciously. Additionally, the cost of ³He has significantly increased over the past few years. ¹⁰B neutron detectors may be one replacement technology for ³He neutron detector applications. However, ¹⁰B neutron detectors can have a reduced sensitivity to neutrons as compared to ³He neutron detectors. As a result, there are benefits for continual improvements in neutron detector technologies so as to address these and other issues.

### BRIEF DESCRIPTION OF THE INVENTION

The following summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

In accordance with one aspect the present invention provides a ¹⁰B neutron detector that includes an exterior shell bounding and sealing an interior volume, a neutron-sensitive boron coating located on at least part of the exterior shell at the interior volume. One of the boron coating and the exterior shell serves as a cathode. The ¹⁰B neutron detector also includes a central structure located within the interior volume and serving as an anode. The detector includes a gas within the interior volume that conducts an electrical energy pulse between the cathode and the anode in response to a neutron impinging upon the neutron-sensitive boron coating. The gas includes a quantity of ³He gas sensitive to neutron impingement and generating an electrical energy pulse for reception by the anode in response to a neutron impinging upon the ³He gas.

In accordance with another aspect the present invention provides a method of detecting neutrons. The method includes providing a ¹⁰B neutron detector. The ¹⁰B neutron detector includes an exterior shell bounding and sealing an interior volume, a neutron-sensitive boron coating located on at least part of the exterior shell at the interior surface of the shell. One of the boron coating and the exterior shell serves as a cathode. The ¹⁰B neutron detector also includes a central structure located within the interior volume and serving as an anode. The detector includes gas within the interior volume that conducts an electrical energy pulse between the cathode and the anode in response to a neutron impinging upon the neutron-sensitive boron coating. The gas includes a quantity of ³He gas sensitive to neutron impingement and generating an electrical energy pulse for reception by the anode in response to a neutron impinging upon the ³He gas. The method includes detecting at least one neutron via impingement of the neutron upon the ³He gas.

### BRIEF DESCRIPTION OF THE DRAWINGS

The foregoing and other aspects of the invention will become apparent to those skilled in the art to which the invention relates upon reading the following description with reference to the accompanying drawings, in which:
FIG. 1 is a schematized view of an example ¹⁰B neutron detector which includes ³He gas in an interior volume in accordance with an aspect of the present invention;
FIG. 2 is a schematized cross section view of an example ¹⁰B neutron detector with interior walls and a plurality of central structures within the interior volume which includes ³He gas;
FIG. 3 is a schematized cross section view of an example ¹⁰B neutron detector with a plurality of central structures and interior walls forming a plurality of sections within the interior volume which includes ³He gas;
FIG. 4 is a schematized cross section view of an example ¹⁰B neutron detector with interior walls that do not form a plurality of sections within the interior volume which includes ³He gas; and
FIG. 5 is a top level flow diagram of a method of detecting neutrons with the ¹⁰B neutron detector of FIG. 1 in accordance with an aspect of the present invention.

### DETAILED DESCRIPTION OF THE INVENTION

Example embodiments that incorporate one or more aspects of the invention are described and illustrated in the drawings. These illustrated examples are not intended to be a limitation on the invention. For example, one or more aspects of the invention can be utilized in other embodiments and even other types of devices. Moreover, certain terminology is used herein for convenience only and is not to be taken as a limitation on the invention. Still further, in the drawings, the same reference numerals are employed for designating the same elements.

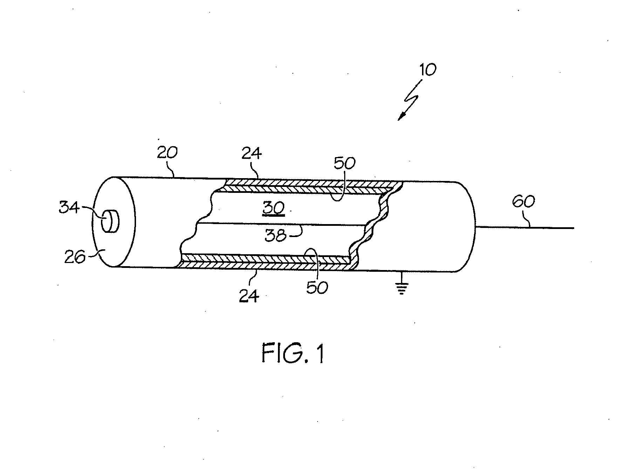

A schematic rendering of an example B-10 (¹⁰B) neutron detector 10 is generally shown within FIG. 1. It is to be appreciated that FIG. 1 shows one example of possible structures/configurations/etc. and that other examples are contemplated within the scope of the present invention. In one specific example, the ¹⁰B neutron detector 10 is used for detecting passing neutrons, for example, by observing the charged particles released in reactions induced by the neutrons. ¹⁰B Neutron detectors 10 can be used in various applications such as radiation monitoring of spent nuclear fuel or in homeland security applications.

The ¹⁰B neutron detector 10 includes an exterior shell 20. The exterior shell 20 may have a circular cross-section, forming a cylindrical exterior shell 20, although other cross-section shapes are also contemplated, including, but not limited to: elliptical, square, rectangular, etc. The exterior shell 20 can include a wall 24 and two ends 26 bounding and sealing an interior volume 30 that contains a gas or a mixture of gases. The exterior shell 20 can be constructed of various metals including, but not limited to, stainless steel and aluminum. An insulator 34 can be located on the two ends 26 of the exterior shell 20 to hold a central structure 38 in place and prevent electrical charges from passing between the central structure 38 and the exterior shell 20 through direct contact. The central structure 38 is located within the interior volume 30 and serves as an anode in an electrical circuit. The central structure 38 can be generally located near the central axis of the exterior shell 20. The central structure 38 can be a wire, or at least of similar proportions to a wire. The ¹⁰B neutron detector 10 also includes an electrical feed through insulator 60 mounted on one of the insulators 34 for transmission of a signal collected by the central structure 38 anode. The electrical feed through insulator 60 can proceed to circuitry, components, and the like for processing of the signal as will be appreciated by the person of ordinary skill in the art. A neutron-sensitive boron coating 50 is located on at least part of the exterior shell 20 at the interior volume 30. The boron coating 50 can cover the interior surface of the wall 24. One of the boron coating 50 and the exterior shell 20 serves as a cathode. In one example, the exterior shell 20 can serve as a cathode of an electrical circuit. In another example, the boron coating 50 can serve as a cathode of an electrical circuit while the exterior shell 20 serves as an insulator.

In one example, the boron coating 50 can include a specific ratio of the naturally occurring isotopes of boron. Boron has two naturally occurring isotopes, ¹⁰B and ¹¹B, typically found in a ratio of about 20% ¹⁰B to about 80% ¹¹B. In one example, the boron coating 50 includes a minimum ratio of the ¹⁰B isotope to the total boron content of greater than 20% by weight. With other variables remaining equal, the ratio of ¹⁰B isotope to the total boron content is directly related to the effectiveness of the ¹⁰B neutron detector 10. Therefore, it is desirable to create a ratio of ¹⁰B isotope to the total boron content in the boron-containing powder that is as high as is practicably attainable. The boron coating 50 can be applied to the interior surface of the wall 24 by any number of methods including, but not limited to: brush application of a boron-containing slurry, dip application of boron-containing slurry, electrostatic spray of boron powder, and heat diffusion of close-packed boron powder into the wall 24 surface.

Traditionally, the interior volume of ¹⁰B neutron detectors is filled with a proportional gas, and additional gases may be present as well. The gas within the interior volume conducts an electrical energy pulse between the cathode and the anode in response to a neutron impinging upon the neutron sensitive boron coating. Typical ¹⁰B neutron detectors include argon as a proportional gas, and some other gases may be mixed with the proportional gas within the interior volume. These other gases can include quench gases that are polyatomic gases, which absorb the ultraviolet light that is created by the reactions within the interior volume and can also tune the performance of the ¹⁰B neutron detector. Examples of quench gases include, but are not limited to, CO₂ and methane.

The ¹⁰B nucleus has a cross section for neutron capture of 3,340 barns. A barn is defined as 10⁻²⁸ m² (100 fm²). The cross section of the boron sensitive substance is directly related to the probability for neutron capture. Thus, the greater the cross section, the greater the probability of neutron capture. Neutrons interact with the boron coating on the interior surface of the wall producing the by-products of an alpha particle with an energy of 1.47 MeV and a lithium ion with an energy of 0.84 MeV. The alpha particle and the lithium ion by-products are propelled in opposite directions. One of these by-products can enter the interior volume and lose its kinetic energy by ionizing the proportional gas within the interior volume. If a voltage difference is created between the anode and the cathode, the electrons produced by this ionization will be attracted to the central structure anode due to the voltage difference. This voltage difference may be several hundred volts with the anode positively biased relative to the cathode. In the region near the central structure anode, more free electrons are created from collisions with gas molecules in a cascade effect. The free electrons collect on the central structure anode resulting in an electronic pulse that can be amplified and digitized. The traditional ¹⁰B neutron detector includes only one substance sensitive to neutrons, the boron coating.

A quantity of ³He gas is provided within the interior volume 30 of the ¹⁰B neutron detector 10. The ³He gas is sensitive to neutron impingement and generates an electrical energy pulse for reception by the anode in response to a neutron impinging upon the ³He gas. The ³He gas behaves as a proportional gas as described above. As a lithium ion or an alpha particle resulting from a neutron interaction with the boron coating 50 pass through the interior volume 30, free electrons are created from the collisions with the ³He gas. These free electrons are drawn toward the central structure 38 anode where they are collected to generate a signal or electronic pulse. The ³He gas can fill the interior volume 30 or the ³He gas may be mixed with other proportional gases such as argon. The ³He gas mixture can be mixed with a quantity of another proportional gas. In one example, the other proportional gas can include argon. In another example the other proportional gas can include argon and a quench gas.

Additionally, the ³He gas within the interior volume 30 also acts as a neutron sensitive substance. Passing neutrons that are adsorbed by the ³He gas produce the by-products of a proton and a Triton particle with a combined energy of 764 keV. The ³He gas nucleus has a cross section for neutron capture of 5,333 barns. The proton and the Triton particle ionize the proportional gas, creating free electrons. If a voltage difference is created between the anode and the cathode, the electrons produced by this ionization will be attracted to the central structure anode due to the voltage difference. This voltage difference may be several hundred volts with the anode positively biased relative to the cathode. In the region near the central structure anode, more free electrons are created from collisions with gas molecules in a cascade effect. The free electrons collect on the central structure anode resulting in an electronic pulse that can be amplified and digitized. The addition of ³He gas to the interior volume 30 as a neutron sensitive substance increases the efficiency of the ¹⁰B neutron detector 10. The neutron sensitive boron coating 50 and the quantity of the ³He gas enable the ¹⁰B neutron detector to operate as both a ¹⁰B-lined neutron detector and a ³He gas-filled neutron detector simultaneously. For example, if a free neutron is not adsorbed by the boron coating 50 on the interior of the wall 24, the neutron may be adsorbed by the ³He gas within the interior volume 30, thereby detecting the neutron and improving the ¹⁰B neutron detector 10 efficiency. This is an improvement over the traditional ¹⁰B neutron detector which lacks an additional neutron sensitive substance within the gas.

The boron coating on the interior of a ¹⁰B neutron detector is in solid form and its reactions with neutrons create ions. However, the boron coating can be self-shielding, meaning that the boron coating adsorbs the neutron and also retains the lithium ion and the alpha particle that result from the neutron adsorption, often due to the boron coating being too thick. This self-shielding condition reduces the effectiveness of the neutron detector as it reduces the possibility of an electrical pulse being collected on the central structure anode. However, a typical ³He gas-filled detector is approximately twenty-times more sensitive to passing neutrons when compared to a typical ¹⁰B-lined detector. Some neutron detection applications require higher sensitivity than ¹⁰B is able to provide. The addition of ³He gas to the interior volume 30 of a ¹⁰B neutron detector 10 as a neutron sensitive substance augments the sensitivity of the ¹⁰B neutron detector 10. Augmenting the sensitivity of the ¹⁰B neutron detector 10 can be achieved with an amount of ³He gas added to the interior volume 30 that is smaller than the amount of ³He gas required to fill a traditional ³He gas neutron detector. This results in a ¹⁰B neutron detector 10 that is more sensitive than a traditional ¹⁰B neutron detector and conserves the use of ³He gas in comparison to a traditional ³He gas neutron detector.

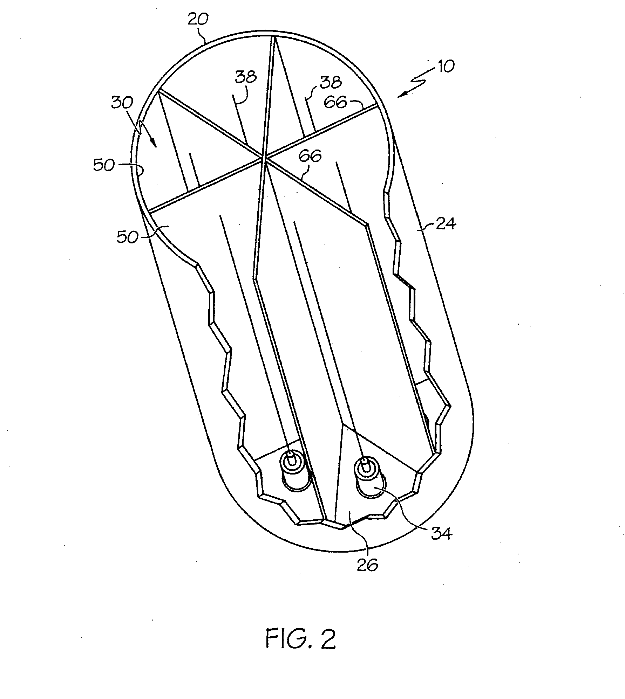

Turning to FIG. 2, a cross section view of another example ¹⁰B neutron detector 10 is shown having a plurality of central structures 38 located within the interior volume 30. The central structures 38 serve as anodes within a common exterior shell 20 bounding and sealing an interior volume 30. The interior volume 30 can include a plurality of interior walls 66. The interior walls 66 can form a plurality of sections within the interior volume 30 so that the sections are not hermetically sealed from one another. The example shown in FIG. 2 contains six sections, however, various numbers and formations of interior walls 66 are contemplated that can form any number of sections within the interior volume 30. A boron coating 50 can cover the interior surface of the wall 24 and the surfaces of the interior walls 66.

The distribution of the central structures 38 can be divided equally between the sections, for example, one central structure 38 per section or two central structures 38 per section. Alternatively, the distribution of the central structures 38 can be divided unequally between the sections, for example, the sections of the interior volume 30 can have zero, one, two, or more central structures in various sections. A quantity of ³He gas can fill the sections of the interior volume 30 or the ³He gas can be mixed with other proportional gases such as argon. The ³He gas can also be mixed with quench gases or a combination of other proportional gases and quench gases.

In another example, the interior walls 66 can form seals between each other and the exterior shell 20 so that there is no fluid communication between the sections. In this example, one particular section can be filled with a proportional gas that is different from the proportional gas of any other section within the same ¹⁰B neutron detector 10.

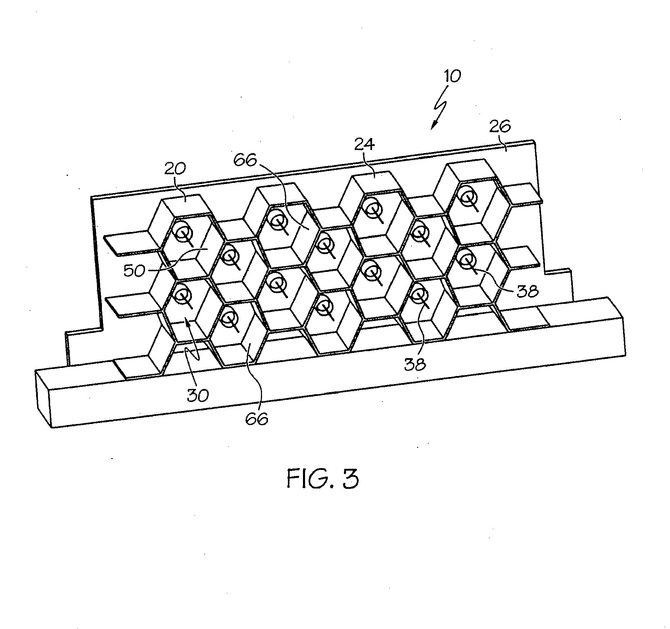

Turning to FIG. 3, a cross section view of another example ¹⁰B neutron detector 10 with interior walls 66 is shown. The common exterior shell 20 including the wall 24 and the two ends 26 (only one shown) bound and seal an interior volume 30. A plurality of sections are formed within the interior volume 30 by the interior walls 66, and a plurality of central structures 38 are distributed throughout the sections. In the shown example, various sections are bounded by interior walls 66 to form a close-packed honeycomb arrangement, although various designs are contemplated. A boron coating 50 can cover the interior surface of the wall 24 and the surfaces of the interior walls 66. The sections can act as individual ¹⁰B neutron detectors that are not necessarily sealed but are contained within a larger interior volume 30 that is sealed by the wall 24 and two ends 26.

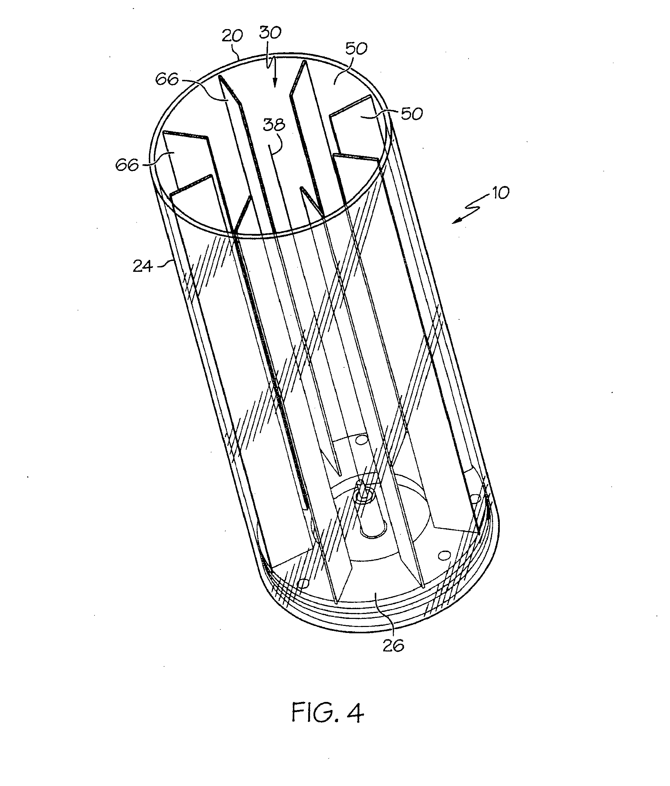

Turning to FIG. 4, a cross section view of another example ¹⁰B neutron detector 10 with interior walls 66 is shown. Portions of the exterior shell 20 are shown as transparent only to promote understanding of the structure of one example ¹⁰B neutron detector 10, not to indicate any material properties of the exterior shell 20. The exterior shell 20 including the wall 24 and the two ends 26 (only one shown) bound and seal an interior volume 30. A plurality of interior walls 66 can be placed within the interior volume 30 in a pattern that does not create individual sections. A boron coating 50 can cover the interior surface of the wall 24 and surfaces of the interior walls 66. The central structure 38 can be located at the central axis of the exterior shell 20.

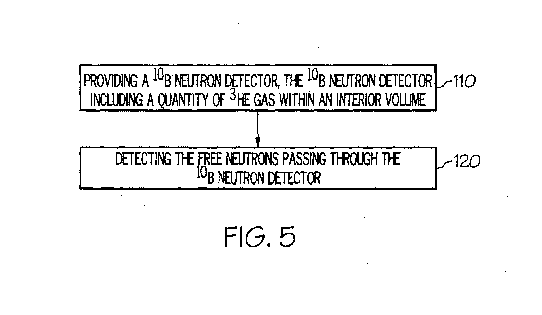

An example method of detecting neutrons with a ¹⁰B neutron detector with its sensitivity enhanced with the addition of ³He gas is generally described in FIG. 5. The method can be performed in connection with the example ¹⁰B neutron detector 10 shown in FIG. 1. The method includes the step 110 of providing a ¹⁰B neutron detector. The ¹⁰B neutron detector includes an exterior shell including a wall and two ends wherein the exterior shell bounds an interior volume and the exterior shell serves as a cathode. The exterior shell may have a circular, elliptical, square, rectangular, or other cross-section that may or may not include surface area enhancement features. The exterior shell can include a wall and two ends to bound an interior volume that can contain a gas. The exterior shell can be constructed of various metals including, but not limited to, stainless steel and aluminum. In an electrical circuit, the exterior shell can act as a cathode. An insulator can be located on the two ends of the exterior shell to hold a central structure in place and prevent electrical charges from passing between the central structure and the exterior shell through direct contact. The central structure can be generally located near the central axis of the exterior shell. The central structure can be of similar proportions to a wire, and can act as an anode in an electrical circuit. A boron coating covers the interior surface of the wall. The ¹⁰B neutron detector also includes an electrical feed through insulator mounted on one of the insulators for transmission of a signal collected by the central structure anode.

A quantity of ³He gas is added to the interior volume of the ¹⁰B neutron detector. The ³He gas behaves as a proportional gas as described above. As a lithium ion or an alpha particle resulting from a neutron interaction with the boron coating pass through the interior volume, free electrons are created from the collisions with the proportional gas. These free electrons are drawn toward the central structure anode where they are collected to generate a signal or electronic pulse. The ³He gas can fill the interior volume or the ³He gas may be mixed with other proportional gases such as argon and a quench gas.

Additionally, the ³He gas within the interior volume also acts as a neutron sensitive substance. Passing neutrons are adsorbed by the ³He gas producing the by-products of a proton and a Triton particle with a combined energy of 764 keV. The proton and the Triton particle ionize the proportional gas, creating free electrons. If a voltage difference is created between the anode and the cathode, the electrons produced by this ionization will be attracted to the central structure anode due to the voltage difference. This voltage difference may be several hundred volts with the anode positively biased relative to the cathode. In the region near the central structure anode, more free electrons are created from collisions with gas molecules in a cascade effect. The free electrons collect on the central structure anode resulting in an electronic pulse that can be amplified and digitized. The addition of ³He gas to the interior volume as a neutron sensitive substance increases the efficiency of the ¹⁰B neutron detector. For example, if a free neutron passes through the boron coating on the interior of the wall without being adsorbed, the neutron can be adsorbed by the ³He gas within the interior volume, thereby detecting the neutron.

The method further includes the step 120 of detecting the free neutrons passing through the ¹⁰B neutron detector. The central structure anode collects the free electrons resulting in a signal or an electronic pulse that can be amplified and digitized. The signal can then be analyzed to determine several measurable quantities such as neutron count rate, discrimination between gamma particle induced pulses, ³He gas induced pulses, and ¹⁰B induced pulses, etc.

In one example, the method can include a boron coating with a ratio of ¹⁰B isotope to the total boron content of a minimum of about 20% by weight. Neutrons interact with the boron coating on the interior surface of the wall creating subatomic by-products. One of these by-products can enter the interior volume and lose its kinetic energy by ionizing the proportional gas within the interior volume. If a voltage difference is created between the anode and the cathode, the electrons produced by this ionization will be attracted to the central structure anode due to the voltage difference.

The addition of ³He gas to the interior volume of a ¹⁰B neutron detector provides a device which utilizes a combination of neutron sensitive substances to increase the overall neutron sensitivity of the detector. The detector incorporates design features that optimize the performance of the proportional counter to simultaneously operate as both a ¹⁰B-lined and a ³He gas-filled neutron detector.

The addition of ³He gas to the interior volume of a ¹⁰B neutron detector provides a device which utilizes a combination of neutron sensitive substances to increase the sensitivity of the ¹⁰B neutron detector, conserve the limited resource of ³He gas, and reduce the cost of sensitive neutron detectors when compared to traditional ³He gas neutron detectors. The use of the ³He gas in a ¹⁰B neutron detector increases the detector efficiency while enabling an effective ¹⁰B neutron detector that requires less ³He gas when compared to traditional ³He gas neutron detectors.

The invention has been described with reference to the example embodiments described above. Modifications and alterations will occur to others upon a reading and understanding of this specification. Example embodiments incorporating one or more aspects of the invention are intended to include all such modifications and alterations insofar as they come within the scope of the appended claims.

## Claims

1. A ¹⁰B neutron detector including:
an exterior shell bounding and sealing an interior volume;
a neutron-sensitive boron coating located on at least part of the exterior shell at the interior volume, wherein one of the boron coating and the exterior shell serves as a cathode;
a central structure located within the interior volume and serving as an anode; and
a gas within the interior volume that conducts an electrical energy pulse between the cathode and the anode in response to a neutron impinging upon the neutron-sensitive boron coating, the gas including a quantity of ³He gas sensitive to neutron impingement and generating an electrical energy pulse for reception by the anode in response to a neutron impinging upon the ³He gas.

2. The ¹⁰B neutron detector according to claim 1, wherein the gas includes the ³He gas mixed with a quantity of another proportional gas.

3. The ¹⁰B neutron detector according to claim 2, wherein the other proportional gas includes argon.

4. The ¹⁰B neutron detector according to claim 2, wherein the other proportional gas includes argon and a quench gas.

5. The ¹⁰B neutron detector according to any preceding claim, wherein the neutron-sensitive boron coating and the quantity of ³He gas enable the ¹⁰B neutron detector to operate as both a ¹⁰B-lined neutron detector and a ³He gas-filled neutron detector simultaneously.

6. The ¹⁰B neutron detector according to any preceding claim, wherein the boron coating includes a minimum ratio of ¹⁰B isotope to the total boron content of greater than 20% by weight.

7. The ¹⁰B neutron detector according to any preceding claim, wherein the exterior shell is cylindrical.

8. The ¹⁰B neutron detector according to any preceding claim, wherein the ¹⁰B neutron detector further includes a plurality of central structures located within the interior volume, the central structures serving as anodes within a common exterior shell bounding and sealing an interior volume.

9. The ¹⁰B neutron detector according to any preceding claim, wherein the ¹⁰B neutron detector further includes a plurality of interior walls, wherein a neutron-sensitive boron coating is located on at least one of the interior walls.

10. A method of detecting neutrons, the method including:
providing a ¹⁰B neutron detector, the ¹⁰B neutron detector including:
an exterior shell bounding and sealing an interior volume;
a neutron-sensitive boron coating located on at least part of the exterior shell at the interior volume, wherein one of the boron coating and the exterior shell serves as a cathode;
a central structure located within the interior volume and serving as an anode; and
a gas within the interior volume that conducts an electrical energy pulse between the cathode and the anode in response to a neutron impinging upon the neutron-sensitive boron coating, the gas including a quantity of ³He gas sensitive to neutron impingement and generating an electrical energy pulse for reception by the anode in response to a neutron impinging upon the ³He gas; and
detecting at least one neutron via impingement of the neutron upon the ³He gas.

11. The method according to claim 10, wherein the step of providing a ¹⁰B neutron detector includes providing that the ³He gas is mixed with a quantity of another proportional gas.

12. The method according to claim 11, wherein the other proportional gas includes argon.

13. The method according to claim 11, wherein the other proportional gas includes argon and a quench gas.

14. The method according to any one of claims 10 to 13, wherein the ¹⁰B neutron detector operates simultaneously as both a ¹⁰B-lined neutron detector and a ³He gas-filled neutron detector.

15. The method according to any one of claims 10 to 14, wherein the ¹⁰B neutron detector further includes a plurality of central structures located within the interior volume, the central structures serving as anodes within a common exterior shell bounding and sealing an interior volume.

16. The method according to any one of claims 10 to 15, wherein the ¹⁰B neutron detector further includes a plurality of interior walls, wherein a neutron-sensitive boron coating is located on at least one of the interior walls.

17. The method according to any one of claims 10 to 16, wherein the boron coating includes a minimum ratio of ¹⁰B isotope to the total boron content of greater than 20% by weight.
